# EUROPÄISCHE PATENTSCHRIFT

(11) **EP 2 769 698 B1**
(45) Veröffentlichungstag und Bekanntmachung des Hinweises auf die Patenterteilung: **02.05.2018**
(21) Anmeldenummer: 14156186.0
(22) Anmeldetag: 21.02.2014
(51) Int. Cl.: A61C 13/12, A61C 19/00

(54) **Dentalgerät zur spanenden Bearbeitung eines Dentalwerkstücks**
Dental appliance for machining a dental work piece
Appareil dentaire pour l'usinage par enlèvement de copeaux d'une pièce dentaire

(30) Priorität: 22.02.2013 DE 102013101758
(43) Veröffentlichungstag der Anmeldung: 27.08.2014
(73) Patentinhaber: Renfert GmbH, 78247 Hilzingen (DE)
(72) Erfinder: Özyurt, Cim, 78244 Gottmadingen (DE)
(74) Vertreter: Daub, Thomas

(56) Entgegenhaltungen:
- EP-A2- 0 879 671
- EP-A2- 0 962 279
- DE-C- 743 878
- DE-U1- 9 313 221
- DE-U1- 9 404 725
- JP-A- 2002 360 610

## Beschreibung

### Stand der Technik

Die Erfindung betrifft ein Dentalgerät zur spanenden Bearbeitung eines Dentalwerkstücks nach dem Oberbegriff des unabhängigen Patentanspruchs 1.
Es sind bereits Dentalgeräte zur spanenden Bearbeitung eines Dentalwerkstücks mit einer Gehäuseeinheit bekannt.
Aus der DE 93 13 221.2 U1 ist ein Dentalgerät zur spanenden Bearbeitung eines Dentalwerkstücks mit einer Gehäuseeinheit bekannt. Das Dentalgerät umfasst eine Arbeitsflächeneinheit, welche als Auflagefläche für das Dentalwerkstücks vorgesehen ist, und eine Bearbeitungseinheit, welche zum Bearbeiten des Dentalwerkstücks vorgesehen ist. Das Dentalwerkstücks wird mit den Händen auf der Auflagefläche festgehalten und der Bearbeitungsvorgang wird durch Betätigung eines U-förmigen Schaltbügels mit dem Handballen ausgelöst. Zur Entfernung des anfallenden Bohrstaubs bzw. Materialabtrags vom Dentalgerät ist eine externe Absauganlage vorgesehen. Das Dentalgerät ermöglicht die Bearbeitung des Dentalwerkstücks nur in einer einzigen Arbeitsposition, da eine Einstellung der Neigung des Dentalgerätes zum Neigen der Arbeitsflächeneinheit nicht vorgesehen ist.

Weitere Dentalgeräte zur spanenden Bearbeitung sind aus DE9404725U1, EP0879671 A2 und JP2002360610A bekannt.

Der Erfindung liegt insbesondere die Aufgabe zu Grunde, ein Dentalgerät bereit-zustellen, mit welchem eine Verbesserung und Vereinfachung der Handhabung ermöglicht wird.
Die Aufgabe wird erfindungsgemäß durch die Merkmale des Patentanspruchs 1 gelöst, wobei weitere Ausgestaltungen der Erfindung den Ansprüchen 2 bis 10 entnommen werden können.

### Vorteile der Erfindung

Die Erfindung geht aus von einem Dentalgerät zur spanenden Bearbeitung eines Dentalwerkstücks mit einer Gehäuseeinheit, einer Arbeitsflächeneinheit, welche als Auflagefläche für das Dentalwerkstück vorgesehen ist, und einer Bearbeitungseinheit, welche zum Bearbeiten des Dentalwerkstücks vorgesehen ist.

Es wird vorgeschlagen, dass die Gehäuseeinheit im Bereich der Bearbeitungseinheit eine schiefe Staubabführungsfläche ausbildet. In diesem Zusammenhang soll unter einer "schiefen Staubabführungsfläche" insbesondere eine von einer Ebene der Arbeitsflächeneinheit abweichende Fläche verstanden werden. Insbesondere ist die Staubabführungsfläche ein Teil der Gehäuseeinheit. Insbesondere ist zwischen der Ebene der Arbeitsflächeneinheit und der schiefen Staubabführungsfläche ein Winkel α größer als 25°, vorteilhaft größer als 30°, vorzugsweise größer als 35° und/oder kleiner als 60°, vorteilhaft kleiner als 50° und vorzugsweise kleiner als 45°, ausgebildet. Insbesondere ist die schiefe Staubabführungsfläche zwischen einer Ebene der Arbeitsflächeneinheit und der Antriebseinheit angeordnet. In vorteilhafter Weise weist die schiefe Staubabführungsfläche eine nach außen abschließende und geschlossene Fläche auf. Insbesondere ist die schiefe Staubabführungsfläche dazu vorgesehen, Vibrationen eines Antriebsaggregats der Bearbeitungseinheit direkt und/oder indirekt aufzunehmen, wodurch eine Staubabfuhr gefördert werden kann. Mit der entsprechenden erfindungsgemäßen schiefen Staubabführungsfläche kann während der Bearbeitung des Dentalvaerkstücks eine zwangsläufige Abführung des Bohrstaubs auf eine besonders wirtschaftliche Weise erfolgen und somit eine stets saubere Arbeitsflächeneinheit des Dentalgeräts bereitgestellt werden. Hierdurch können arbeitsintensive Reinigungsmaßnahmen an der Arbeitsflächeneinheit und eine Anschaffung kostenintensiver Reinigungsgeräte entfallen, wodurch kostenintensive Arbeitszeit und hohe Gerätekosten eingespart werden können. In vorteilhafter Weise ermöglicht die einfache und kostengünstige Konstruktion einen von einer Absauganlage unabhängigen Aufstellungsort, wodurch das Dentalgerät besonders flexibel in einem Dentallabor eingesetzt werden kann. Besonders vorteilhaft ist die Gehäuseeinheit dazu geeignet, das Antriebsaggregat und die elektronischen Bauteile nach außen hin gegen Staubeintrag abzukapseln. Insbesondere unterscheidet sich die erfindungsgemäße Gehäuseeinheit von einer herkömmlichen Gehäuseeinheit, die lediglich zur Aufnahme des Antriebsaggregats und der elektronischen Bauteile vorgesehen ist.
Weiterhin wird vorgeschlagen, dass die schiefe Ebene eine Unterseite eines zumindest teilweise durch die Gehäuseeinheit und/oder die Arbeitsflächeneinheit geformten Hohlraums bildet. Insbesondere bildet die schiefe Staubabführungsfläche eine Unterseite eines Hohlraums, der zumindest großteils von Teilen der Gehäuseeinheit und/oder der Staubabführungsfläche berandet ist. Es kann insbesondere eine geringe Staubbelastung der Umgebung erreicht werden.
In vorteilhafter Weise mündet die schiefe Staubabführungsfläche der Gehäuseeinheit in einen Staubfangbehälter. Insbesondere ist die schiefe Staubabführungsfläche komplett von der Arbeitsflächeneinheit, der Gehäuseeinheit und/oder dem Staubfangbehälter umgeben. Vorzugsweise ist der Staubfangbehälter lediglich zu einem von der Gehäuseeinheit, der Arbeitsflächeneinheit und/oder dem Staubfangbehäter gebildeten Hohlraum hin geöffnet. In vorteilhafter Weise können dadurch zwei Bauteile des Dentalgerätes lösbar miteinander in Wirkverbindung stehen und ohne zusätzlichen Arbeitsaufwand das durch die spanende Bearbeitung eines Dentalwerkstücks anfallende Material vollständig aufnehmen. Hierdurch kann eine Verschmutzung des Dentalgerätes wirkungsvoll verhindert werden. Die schiefe Staubabführungsfläche der Gehäuseeinheit mündet in eine schiefe Staubfangbehälterfläche des Staubfangbehälters. In diesem Zusammenhang soll unter "schiefe Staubfangbehälterfläche" insbesondere eine von einer Ebene der Arbeitsflächeneinheit abweichende Fläche des Staubfangbehälters verstanden werden, wobei insbesondere zwischen der Ebene der Arbeitsflächeneinheit und der schiefen Staubfangbehälterfläche ein Winkel β von größer als 30°, vorteilhaft größer als 35°, vorzugsweise größer als 40° und/oder kleiner als 60°, vorteilhaft kleiner als 55° und vorzugsweise kleiner als 50°, aufgespannt wird. Die schiefe Staubfangbehälterfläche weist eine glatte Fläche auf und führt die schiefe Staubabführungsfläche der Gehäuseeinheit fort. Durch diese einfache konstruktive Ausführung wird die unter der Arbeitsflächeneinheit befindliche schiefe Staubabführungsfläche wesentlich vergrößert, wodurch eine kontinuierliche automatische Abführung des durch die spanende Bearbeitung eines Dentalwerkstücks anfallenden Materials gewährleisten werden kann. In vorteilhafter Weise kann die schiefe Staubfangbehälterfläche des Staubfangbehälters gegenüber der schiefen Staubabführungsfläche der Gehäuseeinheit einen zumindest um 5° größeren abfallend ausgeführten Winkel γ aufweisen, wodurch eine Abführung des anfallenden Materials in den Staubfangbehälter besonders vorteilhaft begünstigt werden kann. Aufgrund der Schwerkraft kann das anfallende Material ohne zusätzliche Mittel gezielt in den Staubfangbehälter weitergeleitet und gesammelt werden.

In einer weiteren vorteilhaften Ausgestaltung der Erfindung deckt die schiefe Staubabführungsfläche der Gehäuseeinheit zumindest teilweise einen Zwischenraum zwischen der Gehäuseeinheit und dem Staubfangbehälter ab. Insbesondere steht die schiefe Staubabführungsfläche über eine, insbesondere obere, Kante der Staubfangbehälterfläche über. Durch die überlappende Konstruktion zwischen der schiefen Staubabführungsfläche der Gehäuseeinheit und dem Staubfangbehälter kann das durch die spanende Bearbeitung eines Dentalwerkstücks anfallende Material nicht in den Zwischenraum gelangen, wodurch das anfallende Material vollständig im Staubfangbehälter gesammelt und das Dentalgerät besonders gut abgedichtet bzw. gegen eine Verschmutzung durch das Material geschützt werden kann.

Es wird vorgeschlagen, dass der Staubfangbehälter in einer Seitenwand der Gehäuseeinheit des Dentalgeräts rastbar angeordnet ist. Dadurch kann sowohl eine einfache Handhabung mit einem hohen Bedienkomfort als auch eine sichere Lagerung des Staubfangbehälters ermöglicht werden. Der Staubfangbehälter ist der Bedienperson zugewandt angeordnet und kann besonders einfach und schnell aus dem Dentalgerät entnommen bzw. in das Dentalgerät eingelegt werden. Insbesondere unterscheidet sich der Staubfangbehälter von einer Schublade, die zu einem Lösen und/oder Montieren zumindest im Wesentlichen linear bewegt wird. Insbesondere ist der Staubfangbehälter zu einer Kippmontage vorgesehen, bei der der Staubfangbehälter bei einer Montage und/oder Demontage um zumindest eine Achse, insbesondere um zumindest 5°, vorteilhaft zumindest 10°, vorzugsweise zumindest 20° gekippt wird.

In einer Ausgestaltung wird vorgeschlagen, dass der Staubfangbehälter über in einem Bodenbereich angeordnete Rastelemente mit einem rastbaren Federelement der Gehäuseeinheit und in einem oberen Randbereich über seine Wandungskontur formschlüssig mit der Gehäuseeinheit des Dentalgeräts zusammenwirkt. Diese Ausführung ermöglicht auf eine besonders einfache konstruktive Art eine sichere Aufnahme und eine stabile werkzeuglose Lagerung des Staubfangbehälters in der Gehäuseeinheit. In vorteilhafter Weise können die Lagertellen für den Staubfangbehälter als Bestandteil der Gehäuseeinheit und bauraumsparend in die Gehäuseeinheit integriert werden, wodurch zusätzliche Bauteile eingespart und die Grundgeometrie der Gehäuseeinheit nicht beeinträchtigt werden.

In einer weiteren Ausgestaltung ist in zumindest einer Seitenwand der Gehäuseeinheit des Dentalgeräts eine Schaltvorrichtung angeordnet. Dadurch kann das Dentalgerät besonders komfortabel eingeschaltet bzw. ausgeschaltet werden. Unter einer "Schaltvorrichtung" soll insbesondere ein Schaltelement verstanden werden, das einen elektrischen Kontakt herstellt bzw. trennt, wenn es betätigt wird. Ein besonders hoher Bedienkomfort kann insbesondere durch ein berührungssensitives Schaltelement erreicht werden, da dieses besonders bei einer bewegungsempfindlichen und präzisen Bearbeitung eines Dentalwerkstücks jede Erschütterung vermeiden helfen kann. Ferner ist ein vorzugsweise berührungssensitives Schaltelement gut gegen Feuchtigkeit bzw. Verschmutzung geschützt und die Oberfläche der Gehäuseeinheit des Dentalgeräts kann im Bereich der Schaltvorrichtung besonders einfach gereinigt werden.

Es wird vorgeschlagen, dass die Arbeitsflächeneinheit zumindest eine Hubhöhenverstelleinrichtung der Arbeitsflächeneinheit zum Einstellen der Bohrtiefe aufweist. In vorteilhafter Weise kann dadurch eine Höhenverstellung für die Arbeitsflächeneinheit, die vorteilhaft für eine präzise und vielseitige Bearbeitung eines Dentalwerkstücks ist, einfach realisiert werden. Insbesondere kann durch die Hubhöhenverstelleinrichtung besonders einfach eine einstellbare Höhenverstellung für die Arbeitsflächeneinheit realisiert werden.

In vorteilhafter Ausgestaltung der Erfindung weist die zumindest eine Hubhöhenverstelleinrichtung zumindest ein als Stellrad ausgeführtes Stellelement auf. Dadurch kann eine Höhenverstellung für die Arbeitsflächeneinheit, die vorteilhaft für eine präzise und vielseitige Bearbeitung eines Dentalwerkstücks ist, einfach und schnell realisiert werden. Mittels eines Stellrads kann eine besonders einfache Konstruktion der Hubhöhenverstelleinrichtung erreicht werden, die kostengünstig herstellbar ist. In vorteilhafter Weise kann das gut zugängliche Stellrad bedient und eine Arbeitshöhenverstellung besonders einfach realisiert werden.

In einer weiteren vorteilhaften Ausgestaltung der Erfindung weist das Dentalgerät eine auf einer Seitenwand der Gehäuseeinheit angeordnete Wellensperreinrichtung zum Blockieren einer Antriebswelle der Bearbeitungseinheit auf. Hierdurch kann ein besonders einfacher und schneller werkzeugloser Wechsel eines Bearbeitungswerkzeugs der Bearbeitungseinheit ermöglicht werden.

Ferner wird eine im Sockelbereich angeordnete Neigungseinrichtung zum Neigen der Arbeitsflächeneinheit gegenüber einer horizontalen Ebene vorgeschlagen. In vorteilhafter Weise kann hierdurch das Dentalgerät den Anforderungen in Bezug auf ergonomische Arbeitsplatzbedingungen gerecht werden und besonders schnell bzw. einfach, da vorteilhafterweise werkzeuglos, an die jeweilige Bedienperson angepasst werden.

### Zeichnungen

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: in einer perspektivischen Darstellung ein erfindungsgemäßes Dentalgerät mit einer Gehäuseeinheit, mit einer Arbeitsflächeneinheit, mit einer Bearbeitungseinheit, mit einer Lasereinheit zur Positionierung eines Dentalwerkstücks und mit einem Staubfangbehälter,
- Fig. 2: in einer perspektivischen Darstellung das Dentalgerät mit einem Staubfangbehälter in einer Kipplage,
- Fig. 3: in einer perspektivischen Darstellung das Dentalgerät mit einer erfindungsgemäßen schiefen Staubabführungsfläche der Gehäuseeinheit ohne Arbeitsflächeneinheit und ohne Staubfangbehälter,
- Fig. 4: in einer perspektivischen Darstellung den erfindungsgemäßen Staubfangbehälter des Dentalgerätes von hinten,
- Fig. 5: in einer Schnittdarstellung das erfindungsgemäße Dentalgerät aus Fig. 1,
- Fig. 6: in einer Schnittdarstellung einen Ausschnitt der Gehäuseeinheit im Bereich der Bearbeitungseinheit mit der schiefen Staubabführungsfläche der Gehäuseeinheit und mit der schiefen Staubfangbehälterfläche des Staubfangbehälters,
- Fig. 7: eine Rückseite des erfindungsgemäßen Dentalgerätes aus Fig. 1 mit einer Wellensperreinrichtung,
- Fig. 8: in einer Seitenansicht das erfindungsgemäße Dentalgerät aus Fig. 1 in einer Kipplage, erzeugt durch eine drehbare Verstellung einer im Sockelbereich befindlichen Neigungseinrichtung, und
- Fig. 9: in einer perspektivischen Darstellung eine Draufsicht des geöffneten Gehäuses des Laserarms mit einer Lasereinheit des Dentalgerätes aus Fig. 1.

### Beschreibung der Ausführungsbeispiele

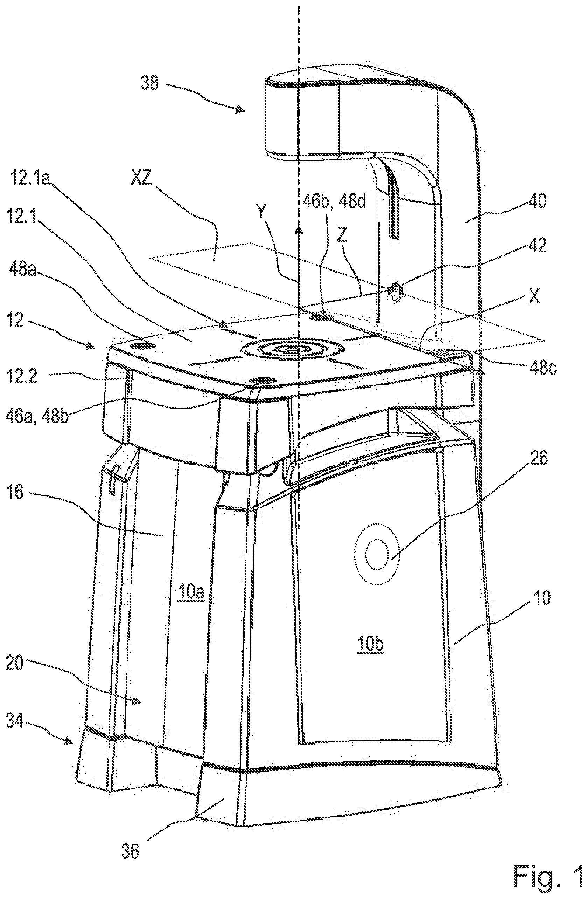

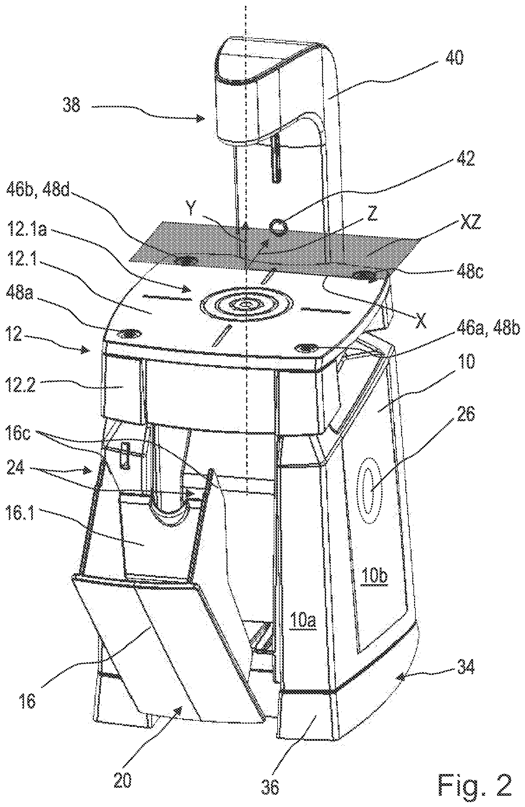

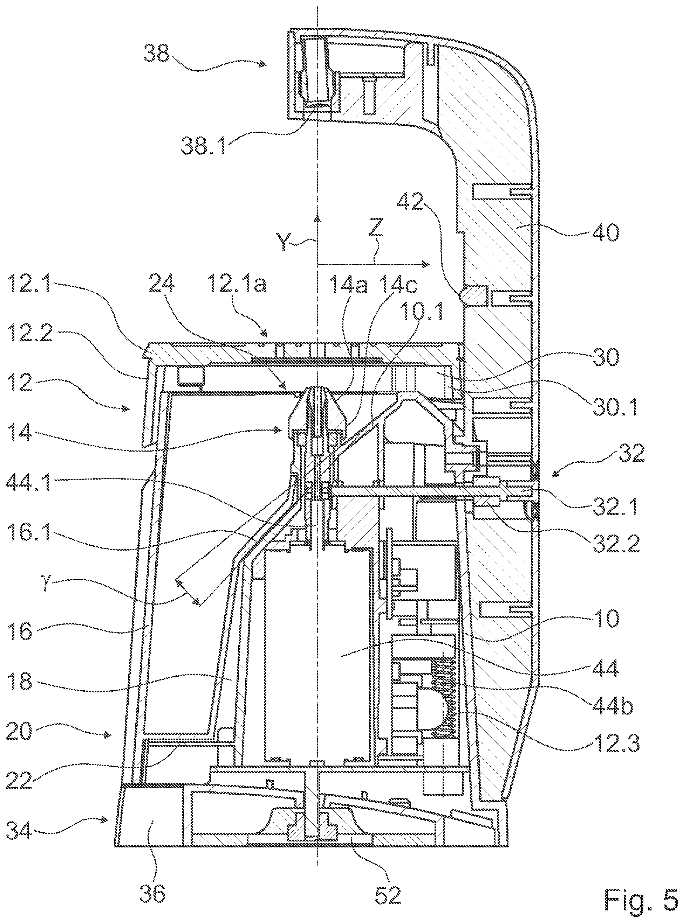

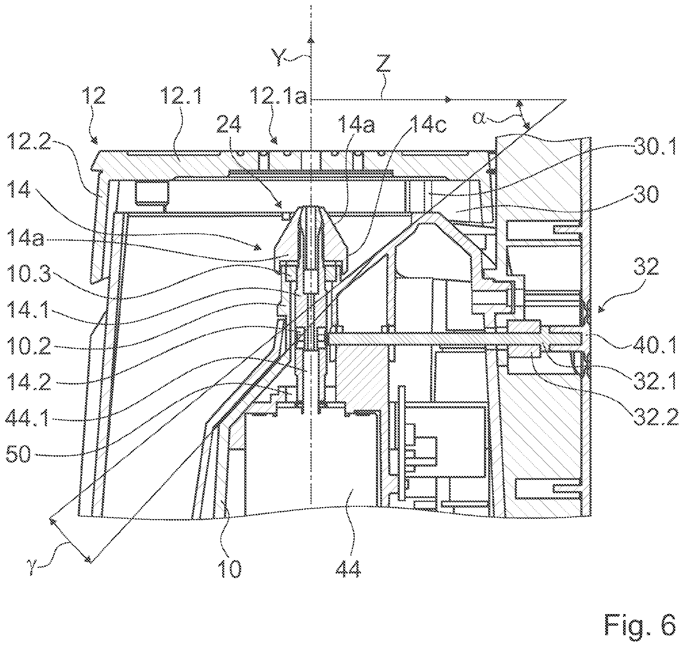

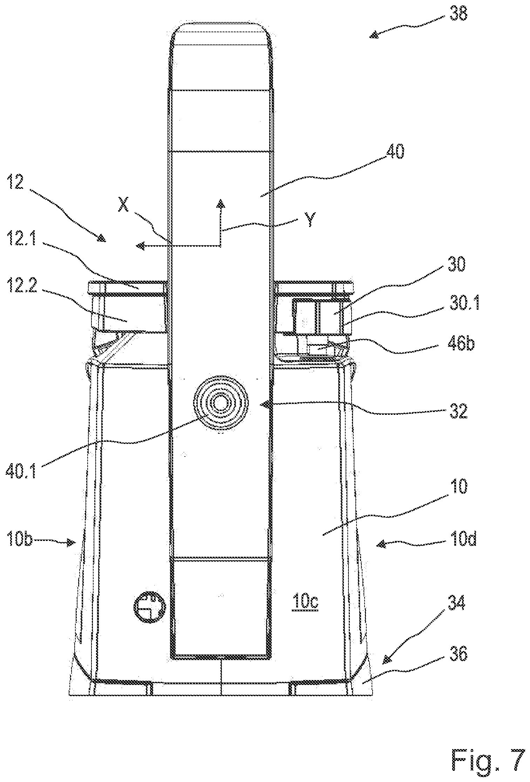

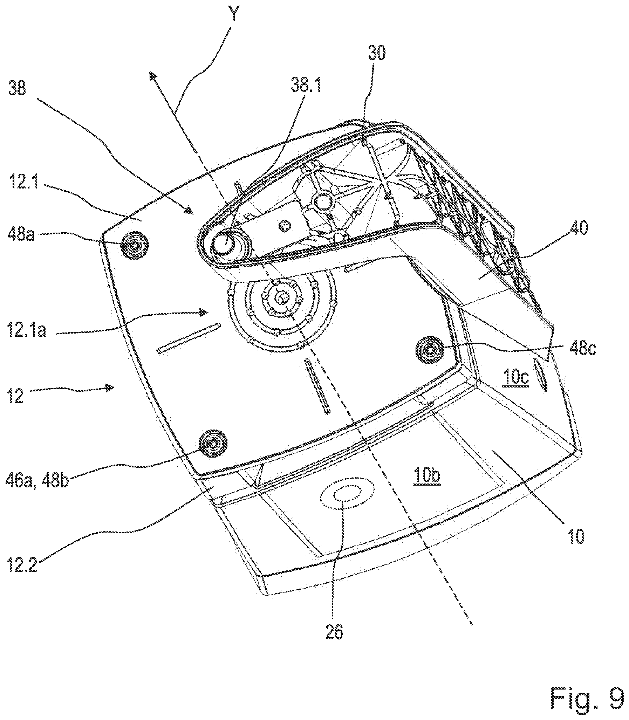

Die Fig. 1 bis 8 zeigen ein erfindungsgemäßes Dentalgerät zur spanenden Bearbeitung eines Dentalwerkstücks. Das Dentalgerät umfasst eine Gehäuseeinheit 10, eine Arbeitsflächeneinheit 12, welche als Auflagefläche 12.1 für das Dentalwerkstück vorgesehen ist, eine Lasereinheit 38, welche zur Positionierung des Dentalwerkstücks auf der Auflagefläche 12.1 vorgesehen ist, und eine Bearbeitungseinheit 14, welche zum Bearbeiten des Dentalwerkstücks vorgesehen ist. Die Bearbeitungseinheit 14 ist in der Gehäuseeinheit 10 in Richtung einer Hochachse Y mittig zur Arbeitsflächeneinheit 12 angeordnet und wird gemäß Fig. 5 und 6 über eine als ein Elektromotor ausgebildete Antriebseinheit 44 angetrieben. Die Arbeitsflächeneinheit 12 ist orthogonal zur Bearbeitungseinheit 14 bzw. zur Hochachse Y bewegbar in Richtung der Hochachse Y auf der Gehäuseeinheit 10 angeordnet. Die glatte Auflagefläche 12.1 ist über Schrauben 48a; 48b; 48c, 48d mit einer Trägerplatte 12.2 befestigt und weist gemäß den Fig. 1, 2, und 9 konzentrisch um eine Hochachse Y im Bereich der Bearbeitungseinheit 14 zylindrische Perforierungen 12.1a auf, durch die Bohrstaub durchfallen kann. Auf einer Rückseite 10c der Gehäuseeinheit 10 ist ein Laserarm 40 befestigt, der oberhalb der Arbeitsflächeneinheit 12 die Lasereinheit 38 koaxial zur Hochachse Y aufnimmt. Da beim Bearbeiten des Dentalwerkstücks ein Bearbeitungswerkzeug der Bearbeitungseinheit 14 durch das Dentalwerkstück verdeckt wird, kann mit Hilfe des Laserstrahls der Lasereinheit 38 die Bohrstelle schnell und zuverlässig ermittelt werden und das Dentalwerkstück auf der Auflagefläche 12.1 in die richtige Bearbeitungsposition verschoben werden. Zum Bearbeiten des Dentalwerkstücks wird die Arbeitsflächeneinheit 12 in Richtung der Bearbeitungseinheit 14 entlang der Hochachse Y nach unten gedrückt, wodurch das Bearbeitungswerkzeug der Bearbeitungseinheit 14 von unten in das Dentalwerkstück eindringt. Durch die spanende Bearbeitung des Dentalwerkstücks fällt Bohrstaub bzw. Materialabtrag an, der die Auflagefläche 12.1 verschmutzen könnte und daher entfernt werden müsste. Üblicherweise müsste das Dentalgerät gereinigt und der Bearbeitungsvorgang am Dentalgerät müsste unterbrochen werden, wodurch hohe Arbeitszeitkosten anfallen könnten.

Um ein Dentalgerät bereitzustellen, mit welchem eine Verbesserung und Vereinfachung der Handhabung ermöglicht wird, wird erfindungsgemäß vorgeschlagen, dass die Gehäuseeinheit 10 im Bereich der Bearbeitungseinheit 14 eine schiefe Staubabführungsfläche 10.1 ausbildet.

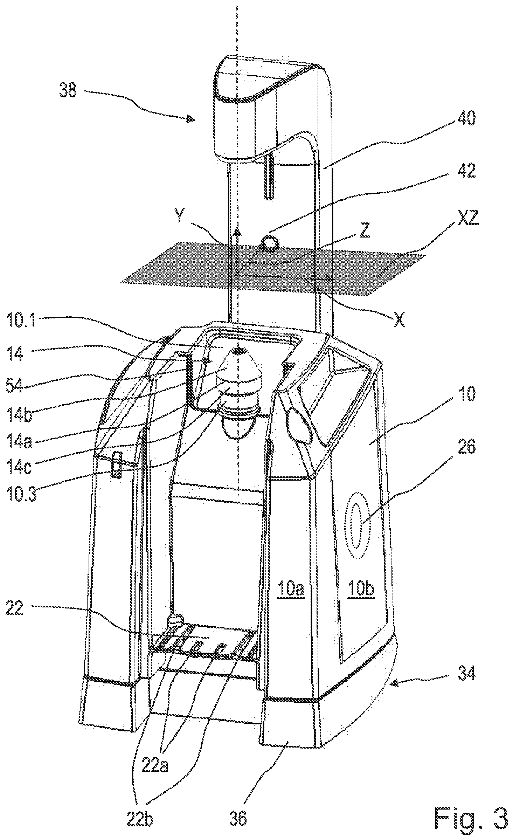

Wie in den Fig. 3, 5 und 6 ersichtlich ist, mündet die schiefe Staubabführungsfläche 10.1 der Gehäuseeinheit 10 in einen Staubfangbehälter 16, der zur Arbeitsflächeneinheit 12 hin offen ausgebildet ist. Aufgrund der schiefen Staubabführungsfläche 10.1 mit einem Winkel α von vorzugsweise 39° kann der anfallende Materialabtrag während der Bearbeitung des Dentalwerkstücks zwangsläufig in die Staubfangbehälter 16 hereinfallen und abgeführt werden, besonders da das Gefälle um einen Winkel γ von 8° zunimmt. Im vorliegenden Ausführungsbeispiel mündet die schiefe Staubabführungsfläche 10.1 der Gehäuseeinheit 10 in eine schiefe Staubfangbehälterfläche 16.1 des Staubfangbehälters 16. Die mit einem Winkel α von vorzugsweise 39° schiefe Staubabführungsfläche 10.1 der Gehäuseeinheit 10 wird mit dem Winkel β von vorzugsweise 47° der schiefen Staubfangbehälterfläche 16.1 fortgeführt und weist somit insgesamt ein zunehmendes Gefälle mit einem Winkel γ von 8° auf, welches zwangsläufig ein Abrutschen des anfallenden Materials in den Staubfangbehälter 16 gewährleisten kann. Die schiefe Staubfangbehälterfläche 16.1 liegt im eingebauten Zustand des Staubfangbehälters 16 flächenbündig an der schiefen Staubabführungsfläche der Gehäuseeinheit 10 an. Die schiefe Staubabführungsfläche 10.1 bildet eine Unterseite eines teilweise durch die Gehäuseeinheit 10 geformten Hohlraums aus. Der Hohlraum ist bis auf Perforierungen 12.1a in der Arbeitsflächeneinheit 12 und kleine Spalten zwischen der Arbeitsflächeneinheit 12 und der Gehäuseeinheit 10 bzw. dem Staubfangbehälter 16 abgeschlossen.

Im Übergangsbereich von der schiefen Staubabführungsfläche 10.1 der Gehäuseeinheit 10 zum Staubfangbehälter 16 kann konstruktiv eine Überlappung derart ausgebildet werden, dass die schiefe Staubabführungsfläche 10.1 der Gehäuseeinheit 10 zumindest teilweise einen Zwischenraum 18 zwischen der Gehäuseeinheit 10 und dem Staubfangbehälter 16 abdeckt. Der Staubfangbehälter 16 weist gemäß Fig. 6 im Bereich der Bearbeitungseinheit 14 eine kragenförmige bzw. eine formschlüssige Ausführung 16d auf, die durch einen ringförmigen Überstand 14.3 abgedeckt wird. Dadurch kann das anfallende Material über den Zwischenraum 18 gleiten und direkt in den Staubfangbehälter 16 hineinfallen.

Um einen Staubeintrag in die Bearbeitungseinheit 14 bzw. in die Antriebseinheit 44 zu verhindern, weist die Gehäuseeinheit 10 gemäß Fig. 6 im Bereich der Bearbeitungseinheit 14 einen rohrförmigen Kragen 10.3 auf, der formschlüssig von einer hülsenförmigen Bearbeitungseinheit 14 umschlossen wird. Im Bereich des rohrförmigen Kragens 10.3 überdeckt eine schiefe Staubabführungsfläche 14b der Bearbeitungseinheit 14 einen Zwischenraum zwischen einer Antriebswelle 44.1 und der Gehäuseeinheit 10. Die Bearbeitungseinheit 14 ist als ein kegelstumpfförmiges Bohrfutterelement 14a ausgeführt, dessen Außenfläche die schiefe Staubabführungsfläche 14b ausbildet. Im vorliegenden Ausführungsbeispiel weist das Bohrfutterelement 14a vorzugsweise einen dem rohrförmigen Kragen 10.3 der Gehäuseeinheit 10 zugewandten zylindrischen Bereich 14c auf, der den rohrförmigen Kragen 10.3 der Gehäuseeinheit 10 umschließt bzw. überdeckt. Im montierten Zustand bilden der rohrförmige Kragen 10.3 der Gehäuseeinheit 10 und das Bohrfutterelement 14a insbesondere in der Staubabführungsfläche 10.1 eine Labyrinthdichtung aus, wodurch ein Staubeintrag in die Gehäuseeinheit 10 besonders effektiv verhindert werden kann und somit die in der Gehäuseeinheit 10 befindlichen Bauteile geschützt werden können. Zwischen der Bearbeitungseinheit 14 und der Antriebseinheit 44 ist eine weitere Staubeintragsperre in Form einer Bohrspindeldichtung 50 angeordnet, wodurch insbesondere die in der Gehäuseeinheit 10 angeordnete Antriebseinheit 44 vor einem Staubeintrag geschützt werden kann. In vorteilhafter Weise ragt die schiefe Staubabführungsfläche 14b des Bohrfutterelements 14a der Bearbeitungseinheit 14 über die schiefe Staubabführungsfläche 10.1 der Gehäuseeinheit 10 und/oder über die schiefe Staubfangbehälterfläche 16.1 des Staubfangbehälters, wodurch ein Staubeintrag in die Werkzeugaufnahme des Bohrfutterelements 14a besonders sicher verhindert werden kann.

Wie in den Fig. 1, 2 und 5 ersichtlich ist, ist der Staubfangbehälter 16 in einer Seitenwand 10a der Gehäuseeinheit 10 des Dentalgeräts rastbar angeordnet. In der dargestellten Ausführung weist der Staubfangbehälter 16 einen sich geodätisch nach unten verjüngenden Querschnitt auf und ist in der einer Bedienperson zugewandten Frontseite 10a der Gehäuseeinheit 10 des Dentalgeräts bewegbar angeordnet. Im eingebauten Zustand ist der Staubfangbehälter 16 in Richtung zur Gehäuseeinheit 10 gekippt gelagert und kann dadurch mit ansteigendem Füllgewicht zunehmend stabiler im Dentalgehäuse gelagert werden. Durch Greifen und Herausziehen des Staubfangbehälters 16 im Bodenbereich 20 kann der Staubfangbehälter 16 aus dem Dentalgehäuse entnommen und geleert werden. Durch das Eigengewicht des Staubfangbehälters 16 und seine zur Gehäuseeinheit 10 hin gekippte Lage kann der leere Staubfangbehälter 16 besonders einfach in das Dentalgehäuse eingelegt und sicher gelagert werden. In vorteilhafter Weise kann der Staubfangbehälter 16 zumindest teilweise aus einem transparenten Kunststoff hergestellt werden oder alternativ kann die Frontseite des Staubfangbehälters 16 ein Sichtfenster aufweisen, wodurch die Bedienperson des Dentalgeräts den Füllstand des Staubfangbehälters 16 im eingelegten Zustand erkennen kann. Ferner kann dadurch ein kostengünstiges, leichtes und dennoch formstabiles Bauteil entstehen.

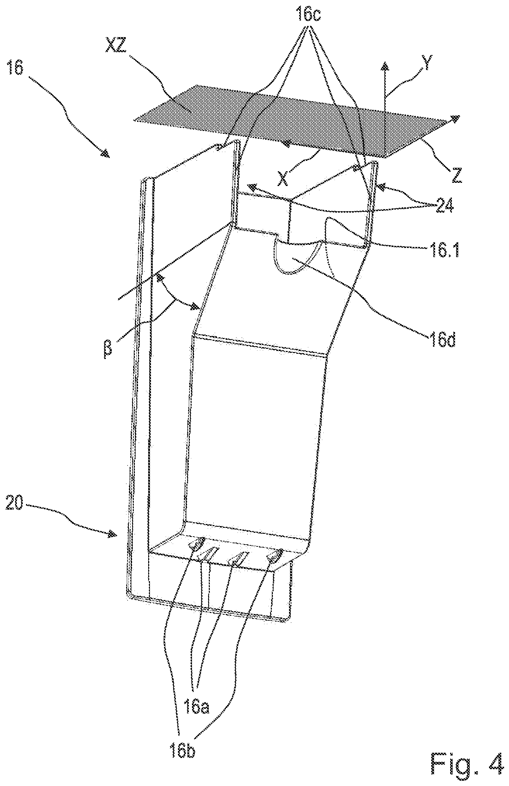

Zur Vereinfachung der Handhabung beim Entnehmen und Einlegen des Staubfangbehälters 16 in das Dentalgehäuse wirkt gemäß den Fig. 3 und 4 der Staubfangbehälter 16 über in einem Bodenbereich 20 angeordnete Rastelemente 16a; 16b mit einem rastbaren Federelement 22 der Gehäuseeinheit 10 und in einem oberen Randbereich 24 über seine Wandungskontur 16c formschlüssig mit der Gehäuseeinheit 10 des Dentalgeräts zusammen. Die Rastelemente 16a; 16b sind als erhabene Auswölbungen paarweise parallel zueinander angeordnet. Das außenliegende Rastelementenpaar 16b kann den Staubfangbehälter 16 über korrespondierende Nuten 22b im Federelement 22 in die Gehäuseeinheit 10 führen und das innenliegende Rastelementenpaar 16a kann den Staubfangbehälter 16 in der eingelegten Endlage mit korrespondierenden Gegenrastelementen 22a im Federelement 22 in der Gehäuseeinheit 10 verrasten. Der obere Randbereich 24 des Staubfangbehälters 16 dient als Anschlagelement und als Rastelement, das in das als Nut ausgeführte korrespondierende Gegenanschlagelement 54 der Gehäuseeinheit 10 eingreift. Diese formschlüssige Verbindung im Übergangsbereich bildet eine Überlappung aus, wodurch der Zwischenraum 18 zwischen der Gehäuseeinheit 10 und dem Staubfangbehälter 16 abgedeckt werden kann.

Weiter ist in zumindest einer Seitenwand 10a; 10b; 10c; 10d der Gehäuseeinheit 10 des Dentalgeräts eine Schaltvorrichtung 26 angeordnet. Im vorliegenden Fall wird ein in der Seitenwand 10b der Gehäuseeinheit 10 angeordneter kapazitiver Taster als berührungssensitives Schaltelement verwendet, das bei einer drucklosen Berührung durch einen Benutzer bzw. eine Bedienperson einen Schaltimpuls an eine Elektronikeinheit aussendet. Als Schaltvorrichtung 26 sind beispielsweise berührungssensitive Schaltelemente denkbar, die vorzugsweise als Touch-Schaltelement, Touch-Slider oder zumindest teilweise segmentförmig ausgeführte Rund-Slider ausgebildet sein können. Vorzugsweise wird das Schaltelement durch eine Bedienperson betätigt, wodurch ein berührungssensitives Schaltelement eine wesentliche Arbeitserleichterung darstellt. Alternativ kann das Dentalgerät eine Schaltvorrichtung 26 in der linken Seitenwand 10d und eine Schaltvorrichtung 26 in der rechten Seitenwand 10b der Gehäuseeinheit 10 aufweisen, um somit sowohl einem Rechtshänder als auch einem Linkshänder gerecht zu werden. Das Schaltelement kann durch eine Prägung und/oder einen farblichen Aufdruck auf der Gehäuseeinheit 10 des Dentalgeräts gekennzeichnet werden.

Wie aus den Fig. 1 bis 3 ersichtlich ist, weist das Dentalgerät neben dem Staubfangbehälter 16 und unterhalb der Arbeitsflächeneinheit 12 ein Leuchtmittel 42 auf, das einer Bedienperson einen Schaltzustand des Dentalgerätes anzeigen kann. In einem aktivierten Schaltzustand des Dentalgerätes kann das als LED ausgebildete Leuchtmittel 42 mit Strom versorgt werden und leuchten. Durch ein Leuchtmittel 42 kann der Schaltzustand der Schaltvorrichtung 26 besonders einfach und gut sichtbar gekennzeichnet werden. In vorteilhafter Weise ist das Leuchtmittel als eine LED ausgebildet. Eine LED weist bei einem geringen Kostenaufwand eine besonders hohe Lebensdauer auf.

Im Laserarm 40 des Dentalgerätes ist gemäß den Fig. 1 bis 3 und den Fig. 5 und 9 oberhalb der Arbeitsflächeneinheit 12 eine justierbare Lasereinheit 38 koaxial zur Hochachse Y angeordnet. Die Lasereinheit 38 umfasst ein kugelgelagertes Laserelement 38.1, das in einem hier nicht dargestellten Lager justiert und mittels einer Schraubverbindung fixiert werden kann. Um die Lebensdauer der Lasereinheit 38 zu erhöhen, kann die Lasereinheit 38 nach einer vorgegeben Zeit automatisch deaktiviert werden. Bei einer Betätigung der Schaltvorrichtung 26 oder anderer Elemente des Dentalgerätes kann die Lasereinheit 38 reaktiviert werden. Hierdurch wird eine hohe Lebensdauer erreicht, da die Lasereinheit 38 nur während des Bearbeitungsvorgangs mit Betriebsspannung versorgt wird. Besonders vorteilhaft ist, dass eine defekte Lasereinheit 38 vom Kunden selbst ausgetauscht werden kann.

Zum Bearbeiten eines Dentalwerkstücks und zum Einstellen der Bohrtiefe weist die Arbeitsflächeneinheit 12 gemäß den Fig. 1, 2, 5 und den Fig. 7 und 8 zumindest eine Hubhöhenverstelleinrichtung 28 auf, die zumindest ein als Stellrad ausgeführtes Stellelement 30 aufweist. Die Arbeitsflächeneinheit 12 ist im vorliegenden Beispiel quadratisch ausgeführt und wird in ihren Eckbereichen über zumindest zwei diagonal zueinander angeordnete Führungswellen 46a und 46b auf der Gehäuseeinheit 10 gelagert. Die Führungswellen 46a; 46b sind drehfest mit der Gehäuseeinheit 10 des Dentalgeräts verbunden und erlauben eine vertikale Bewegung der Arbeitsflächeneinheit 12 in Richtung der Hochachse Y. Durch die Führung mittels der Führungswellen 46a; 46b kann eine exakte Führung der Arbeitsflächeneinheit 12 erreicht werden. Die Arbeitsflächeneinheit 12 weist eine Federeinheit 12.3 auf. Die Federeinheit 12.3 ist parallel zu den Führungswellen 46a; 46b ausgerichtet. Die Federeinheit 12.3 weist eine Spiralfeder auf, die sich um die Führungswelle 46b windet. Die Federeinheit 12.3 bewirkt eine Kraft, die die Arbeitsflächeneinheit 12 nach oben stützt und bei einem Herunterdrücken der Arbeitsflächeneinheit 12, bei dem eine Bearbeitung durch das Bearbeitungswerkzeug erfolgt, einem Bediener entgegenwirkt. Die Federeinheit 12.3 bewirkt eine Rückstellung der Arbeitsflächeneinheit 12 in eine Ausgangsposition beim Lösen einer Betätigungskraft durch den Bediener.

Wie aus den Fig. 5 bis 7 ersichtlich ist, weist eine Hubhöhenverstelleinrichtung 28 zumindest ein als Stellrad ausgeführtes Stellelement 30 auf. Das Stellrad 30 ist durch eine Aussparung in der Arbeitsflächeneinheit 12 teilweise nach außen geführt und kann von außen bedient werden. Die Führungswelle 46b und das Stellrad 30 sind über ein Trapezgewinde in Richtung der Hochachse Y drehbar miteinander verbunden, wodurch eine Drehung des Stellrads 30 zu einer Höhenverstellung der Arbeitsflächeneinheit 12 führt. Durch die Höhenverstellung der Arbeitsflächeneinheit 12 kann die Höhe verstellt werden, über die das Bearbeitungswerkzeug über eine Auflagefläche 12.1 hinausragt. Das Stellrad 30 kann stufenlos verstellt werden und weist an seinem Umfang Rastrillen 30.1 auf. Die Arbeitsflächeneinheit 12 umfasst ein hier nicht dargestelltes elastisches Stellradrastelement, das in Wirkverbindung mit den Rillen 30.1 des Stellrads 30 die Arbeitsflächeneinheit 12 in unterschiedlichen Arbeitshöhen arretieren kann.

In vorliegender Ausführung des Dentalgerätes kann die Antriebseinheit 44 durch Herunterdrücken der Arbeitsflächeneinheit 12 von einem Löseschalter, der im Ausgangszustand mit einer Führungsstange der Arbeitsflächeneinheit 12 in Kontakt steht und ausgeschaltet ist, von der Arbeitsflächeneinheit 12 getrennt und somit eingeschaltet werden. Während des Bearbeitungsvorgangs sind die Arbeitsflächeneinheit 12 und der Löseschalter voneinander getrennt. Hierdurch kann ein verbesserter Kraftfluss erreicht werden. Insbesondere kann ein Verkanten der Führungsstange vermieden werden.

Im vorliegenden Ausführungsbeispiel gemäß den Fig. 5, 6 und 7 weist das Dentalgerät eine auf einer Rückseite 10c der Gehäuseeinheit 10 angeordnete Wellensperreinrichtung 32 zum Blockieren eines zwischen der Antriebseinheit 44 und der Bearbeitungseinheit 14 angeordneten Werkzeugaufnahmeelements 14.1 auf, wobei die Wellensperreinrichtung 32 selbstverständlich auch an einer Seitenwand 10b; 10d angeordnet sein kann. Die Wellensperreinrichtung 32 ist in Richtung einer Längsachse Z bzw. quer zur Hochachse Y angeordnet und verläuft koaxial zur Mittelachse einer Ausnehmung 14.2 des Werkzeugaufnahmeelements 14.1. Die Wellensperreinrichtung 32 umfasst ein mit einer Laserarmabdeckung 40.1 federnd verbundenes Wellensperrelement 32.1, welches druckbetätigt von außen die Ausnehmung 14.2 des Werkzeugaufnahmeelements 14.1 durchdringt und somit eine Drehbewegung des Werkzeugaufnahmeelements 14.1 sperren kann. Wird die Laserarmabdeckung 40.1 entlastet, bewegt sich das Wellensperrelement 32.1, insbesondere durch ein, vorteilhaft als Vollkörper, beispielsweise als Schaumstoffkörper und/oder als Gummikörper, ausgebildetes, Federelement 32.2 angetrieben, aus der Ausnehmung 14.2 des Werkzeugaufnahmeelements 14.1 nach außen und entsperrt das Werkzeugaufnahmeelement 14.1. Während das Werkzeugaufnahmeelement 14.1 gesperrt ist, kann zum Entnehmen bzw. zum Einsetzen des Bearbeitungswerkzeugs das Bohrfutterelement 14a der Bearbeitungseinheit 14 von Hand geöffnet bzw. geschlossen werden. Eine am Umfang des Bohrfutterelements 14a angebrachte Oberflächentextur, beispielsweise in Form einer Rändelung, kann das Bohrfutterelement 14a griffig gestalten bzw. ein Abrutschen verhindern, wodurch ein höheres Anzugmoment beim Drehen des Bohrfutterelements 14a ermöglicht werden kann. Nach außen ist die Wellensperreinrichtung 32 flächenbündig durch eine flächenbündige Laserarmabdeckung 40.1 aus einem elastischen Material verdeckt.

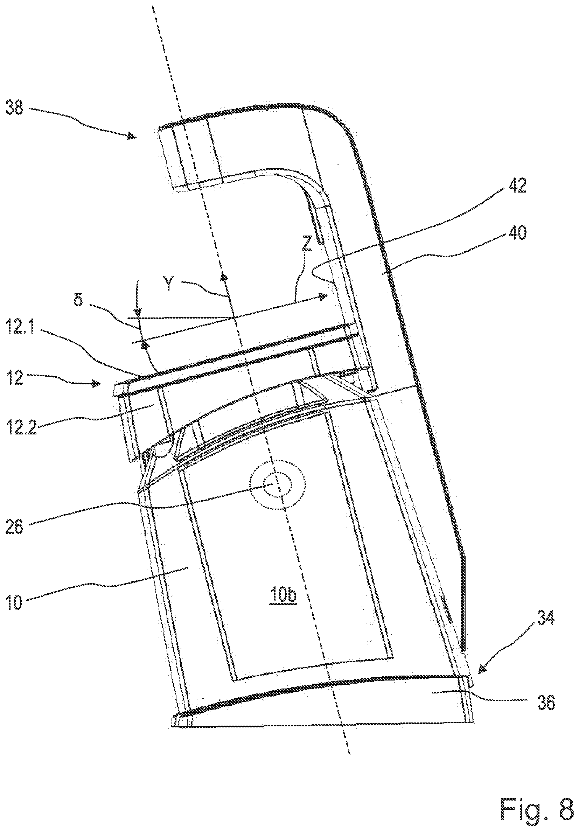

Das Dentalgerät weist gemäß Fig. 5 und 8 eine im Sockelbereich 34 angeordnete Neigungseinrichtung 36 zum Neigen der Arbeitsflächeneinheit 12 gegenüber einer horizontalen Ebene XZ auf. Durch Lösen eines Sockelmutterelements 52 im Sockelbereich 34 kann die Neigungseinrichtung 36 des Dentalgerätes um einen Winkel von 180° gedreht und wieder fixiert werden, wodurch das Dentalgerät gemäß Fig. 8 um einen Winkel δ von 16° nach vorne geneigt werden kann. Durch das Neigen des Dentalgerätes werden auch die schiefe Staubabführungsfläche 10.1 der Gehäuseeinheit 10 und die schiefe Staubfangbehälterfläche 16.1 der Staubfangbehälter 16 beeinflusst, wodurch das mit einem Winkel δ von 16° zunehmende Gefälle die Staubmaterialabführung besonders begünstigen kann.

In vorteilhafter Weise können die Gehäuseeinheit 10, der Staubfangbehälter 16, der Laserarm 40, die Arbeitsflächeneinheit 12 und die Neigungseinrichtung 36 besonders kostengünstig aus Kunststoff hergestellt werden, wobei jedoch auch andere, einem Fachmann als sinnvoll erscheinende Werkstoffe zur Herstellung der Bauteile des Dentalgerätes denkbar sind. Durch die Herstellung der Bauteile aus Kunststoff ergibt sich die Möglichkeit von mannigfaltig herstellbaren Geometrien der Bauteile mit geringem Gewicht. Ferner kann dadurch ein kostengünstiges und formstabiles Dentalgerät entstehen.

### Bezugszeichen

- 10: Gehäuseeinheit
- 10a; 10b; 10d: Seitenwand (Gehäuseeinheit)
- 10c: Rückseite (Gehäuseeinheit)
- 10.1: Schiefe Staubabführungsfläche (Gehäuseeinheit)
- 10.2: Ringförmiger Überstand (Gehäuseeinheit)
- 10.3: Rohrförmiger Kragen (Gehäuseeinheit)
- 12: Arbeitsflächeneinheit
- 12.1: Auflagefläche
- 12.1a: Perforierung
- 12.2: Trägerfläche
- 12.3: Federeinheit
- 14: Bearbeitungseinheit
- 14b: Schiefe Staubabführungsfläche (Bohrfutterelement)
- 14c: Zylindrischer Bereich (Bohrfutterlement)
- 14.1: Werkzeugaufnahmeelement (Bearbeitungseinheit)
- 14.2: Ausnehmung
- 16: Staubfangbehälter
- 16.1: Schiefe Staubfangbehälterfläche (Staubfangbehälter)
- 16a: Rastelement (Staubfangbehälter)
- 16b: Führungselement (Staubfangbehälter)
- 16c: Wandungskontur (Staubfangbehälter)
- 16d: Kragenförmige Ausführung (Staubfangbehälter)
- 18: Zwischenraum
- 20: Bodenbereich (Staubfangbehälter)
- 22: Federelement (Gehäuseeinheit)
- 22a: Gegenrastelement (Gehäuseeinheit)
- 22b: Gegenführungselement (Gehäuseeinheit)
- 24: Oberer Randbereich (Staubfangbehälter)
- 26: Schaltvorrichtung
- 28: Hubhöhenverstelleinrichtung
- 30: Stellelement/Stellrad
- 30.1: Rastrille (Stellrad)
- 32: Wellensperreinrichtung
- 32.1: Wellensperrelement
- 32.2: Federelement
- 34: Sockelbereich
- 36: Neigungseinrichtung
- 38: Lasereinheit
- 38.1: Laserelement
- 40: Laserarm
- 40.1: Laserarmabdeckung
- 42: Leuchtmittel
- 44: Antriebseinheit (Elektromotor)
- 44.1: Antriebswelle (Elektromotor)
- 46a, 46b: Führungsteile
- 48a, 48b, 48c, 48d: Schraube
- 50: Bohrspindeldichtung
- 52: Sockelmutterelement
- 54: Gegenanschlagelement

- X: Querachse
- Y: Hochachse
- Z: Längsachse
- XZ: Horizontale Ebene
- α: Winkel (Staubabführungsflächen)
- β: Winkel (Staubfangbehälterflächen)
- γ: Winkel (Abweichung)
- δ: Winkel (Neigung)

## Patentansprüche

1. Dentalgerät zur spanenden Bearbeitung eines Dentalwerkstücks mit einer Gehäuseeinheit (10), einer Arbeitsflächeneinheit (12), welche als Auflagefläche (12.1) für das Dentalwerkstück vorgesehen ist, und einer Bearbeitungseinheit (14), welche zum Bearbeiten des Dentalwerkstücks vorgesehen ist, wobei die Gehäuseeinheit (10) im Bereich der Bearbeitungseinheit (14) eine schiefe Staubabführungsfläche (10.1, 14b) ausbildet, wobei die schiefe Staubabführungsfläche (10.1) eine Unterseite eines zumindest teilweise durch die Gehäuseeinheit (10) geformten Hohlraums bildet und wobei die schiefe Staubabführungsfläche (10.1) der Gehäuseeinheit (10) in einen Staubfangbehälter (16) mündet, wobei die schiefe Staubabführungsfläche (10.1) der Gehäuseeinheit (10) in eine schiefe Staubfangbehälterfläche (16.1) des Staubfangbehälters (16) mündet, wobei die schiefe Staubfangbehälterfläche (16.1) eine glatte Fläche aufweist,
**dadurch gekennzeichnet, dass**
die schiefe Staubfangbehälterfläche (16.1) die schiefe Staubabführungsfläche (10.1) der Gehäuseeinheit (10) fortführt.

2. Dentalgerät nach Anspruch 1, **dadurch gekennzeichnet, dass** die schiefe Staubabführungsfläche (10.1) der Gehäuseeinheit (10) zumindest teilweise einen Zwischenraum (18) zwischen der Gehäuseeinheit (10) und dem Staubfangbehälter (16) abdeckt.

3. Dentalgerät nach Anspruch 1 oder 2, **dadurch gekennzeichnet, dass** der Staubfangbehälter (16) in einer Seitenwand (10a) der Gehäuseeinheit (10) des Dentalgeräts rastbar angeordnet ist.

4. Dentalgerät nach einem der Ansprüche 1 bis 3, **dadurch gekennzeichnet, dass** der Staubfangbehälter (16) über in einem Bodenbereich (20) angeordnete Rastelemente (16a; 16b) mit einem rastbaren Federelement (22) der Gehäuseeinheit (10) und in einem oberen Randbereich (24) über seine Wandungskontur (16c) formschlüssig mit der Gehäuseeinheit (10) des Dentalgeräts zusammenwirkt.

5. Dentalgerät nach einem der Ansprüche 1 bis 4, **dadurch gekennzeichnet, dass** in zumindest einer Seitenwand (10a; 10b; 10c; 10d) der Gehäuseeinheit (10) des Dentalgeräts eine Schaltvorrichtung (26) angeordnet ist.

6. Dentalgerät nach einem der Ansprüche 1 bis 5, **dadurch gekennzeichnet, dass** die Arbeitsflächeneinheit (12) zumindest eine Hubhöhenverstelleinrichtung (28) zum Einstellen der Bohrtiefe aufweist.

7. Dentalgerät nach Anspruch 6, **dadurch gekennzeichnet, dass** die zumindest eine Hubhöhenverstelleinrichtung (28) zumindest ein als Stellrad ausgeführtes Stellelement (30) aufweist.

8. Dentalgerät nach einem der Ansprüche 1 bis 7, **gekennzeichnet durch** eine auf einer Seitenwand (10b 10c; 10d) der Gehäuseeinheit (10) angeordnete Wellensperreinrichtung (32) zum Blockieren einer Antriebswelle (44.1) der Bearbeitungseinheit (14).

9. Dentalgerät nach einem der Ansprüche 1 bis 8, **gekennzeichnet durch** eine im Sockelbereich (34) angeordnete Neigungseinrichtung (36) zum Neigen der Arbeitsflächeneinheit (12) gegenüber einer horizontalen Ebene (XZ).

10. Dentalgerät zumindest nach Anspruch 1, **dadurch gekennzeichnet, dass** eine schiefe Staubabführungsfläche (14b) der Bearbeitungseinheit (14) einen Zwischenraum zwischen einer Antriebswelle (44.1) und der Gehäuseeinheit (10) überdeckt.

## Claims

1. Dental appliance for machining a dental work piece, with a housing unit (10), with a work surface unit (12) configured as a support surface (12.1) for the dental work piece and with a machining unit (14) configured for machining the dental work piece, wherein the housing unit (10) forms, in a region of the machining unit, an inclined dust discharge surface (10.1, 14b), wherein the inclined dust discharge surface (10.1) realises an underside of a hollow space formed at least partly by the housing unit (10) and wherein the inclined dust discharge surface (10.1) of the housing unit (10) opens out into a dust catching container (16), wherein the inclined dust discharge surface (10.1) of the housing unit (10) opens out into an inclined dust-catching-container surface (16.1) of the dust catching container (16), wherein the inclined dust-catching-container surface (16.1) has a smooth surface,
**characterised in that**
the inclined dust-catching-container surface (16.1) continues the inclined dust discharge surface (10.1) of the housing unit (10).

2. Dental appliance according to claim 1, **characterised in that** the inclined dust discharge surface (10.1) of the housing unit (10) covers an intermediate space (18) between the housing unit (10) and the dust catching container (16) at least partly.

3. Dental appliance according to claim 1 or 2, **characterised in that** the dust catching container (16) is arranged in a side wall (10a) of the housing unit (10) of the dental appliance in a latchable fashion.

4. Dental appliance according to one of claims 1 to 3, **characterised in that** the dust catching container (16) cooperates with a latchable spring element (22) of the housing unit (10) via latch elements (16a; 16b) arranged in a bottom region (20), and cooperates in its upper edge region (24) with the housing unit (10) of the dental appliance in a form-fit fashion via its wall contour (16c).

5. Dental appliance according to one of claims 1 to 4, **characterised in that** a switching device (46) is arranged in at least one side wall (10a; 10b; 10c; 10d) of the housing unit (10) of the dental appliance.

6. Dental appliance according to one of claims 1 to 5, **characterised in that** the work surface unit (12) comprises at least one lift height adjustment unit (28) for adjusting a drill depth.

7. Dental appliance according to claim 6, **characterised in that** the at least one lift height adjustment unit (28) comprises at least one adjusting element (30) embodied as an adjusting wheel.

8. Dental appliance according to one of claims 1 to 7, **characterised by** a shaft-block device (32), which is arranged on a side wall (10b; 10c; 10d) of the housing unit (10) and is designed for blocking a transmission shaft (44.1) of the machining unit (14).

9. Dental appliance according to one of claims 1 to 8, **characterised by** a pitch apparatus (36) arranged in a base region (34) for tilting the work surface unit (12) with respect to a horizontal plane (XZ).

10. Dental appliance at least according to claim 1, **characterised in that** an inclined dust discharge surface (14b) of the machining unit (14) covers an interstice between a transmission shaft (44.1) and the housing unit (10).

## Revendications

1. Appareil dentaire pour l'usinage par enlèvement de copeaux d'une pièce dentaire, avec une unité de boîtier (10), avec une unité de surface à travail (12), laquelle est prévue comme surface porteuse (12.1) pour la pièce dentaire, et avec une unité d'usinage (14), laquelle est prévue pour usiner la pièce dentaire, l'unité de boîtier (10) réalisant dans une zone de l'unité d'usinage (14) une surface inclinée emportant de poussière (10.1, 14b), la surface inclinée emportant de poussière (10.1) implémentant une face inférieure d'une cavité formée au moins partiellement par l'unité de boîtier (10) et la surface inclinée emportant de poussière (10.1) de l'unité de boîtier (10) débouchant dans un réservoir attrapant de poussière (16) et la surface inclinée emportant de poussière (10.1) de l'unité de boîtier (10) débouchant dans une surface inclinée attrapant de poussière (16.1) du réservoir attrapant de poussière (16), la surface inclinée attrapant de poussière (16.1) comportant une surface lisse,
**caractérisé en ce que** la surface inclinée attrapant de poussière (16.1) continue la surface inclinée emportant de poussière (10.1) de l'unité de boîtier (10).

2. Appareil dentaire selon la revendication 1, **caractérisé en ce que** la surface inclinée emportant de poussière (10.1) de l'unité de boîtier (10) couvre au moins partiellement un interstice (18) entre l'unité de boîtier (10) et le réservoir attrapant de poussière (16).

3. Appareil dentaire selon la revendication 1 ou 2, **caractérisé en ce que** le réservoir attrapant de poussière (16) est disposé de manière encliquetable dans une paroi latérale (10a) de l'unité de boîtier (10) de l'appareil dentaire.

4. Appareil dentaire selon l'une quelconque des revendications 1 à 3, **caractérisé en ce que** le réservoir attrapant de poussière (16) coopère avec un élément de ressort encliquetable (22) de l'unité de boîtier (10) par le biais d'éléments encliqueteurs (16a ; 16b) disposés dans une zone de fond (20), et coopère, via liaison par forme, avec l'unité de boîtier (10) de l'appareil dentaire par le biais de sa contour à paroi (16c).

5. Appareil dentaire selon l'une quelconque des revendications 1 à 4, **caractérisé en ce qu'**un dispositif commutateur (26) est disposé dans au moins une paroi latérale (10a ; 10b ; 10c ; 10d) de l'unité de boîtier (10) de l'appareil dentaire.

6. Appareil dentaire selon l'une quelconque des revendications 1 à 5, **caractérisé en ce que** l'unité de surface à travail (12) comporte au moins un dispositif d'ajustement d'une hauteur de levage (28) pour ajuster la profondeur de forage.

7. Appareil dentaire selon la revendication 6, **caractérisé en ce que** l'au moins un dispositif d'ajustement d'une hauteur de levage (28) comporte au moins un élément de réglage (30) réalisé comme roue de réglage.

8. Appareil dentaire selon l'une quelconque des revendications 1 à 7, **caractérisé par** un dispositif à blocage d'arbre (32) disposé sur une paroi latérale (10b ; 10c ; 10d) de l'unité de boîtier (10) pour bloquer un arbre de transmission (44.1) de l'unité d'usinage (14).

9. Appareil dentaire selon l'une quelconque des revendications 1 à 8, **caractérisé par** un dispositif à inclinaison (36) disposé dans une zone de socle (34) pour le bût d'incliner l'unité de surface à travail (12) par rapport à un plan horizontal (XZ).

10. Appareil dentaire au moins selon la revendication 1, **caractérisé en ce qu'**une surface inclinée emportant de poussière (14b) de l'unité d'usinage (14) couvre un interstice entre un arbre de transmission (44.1) et l'unité de boîtier (10).
